# EUROPEAN PATENT APPLICATION

(11) **EP 4 485 326 A1**
(43) Date of publication of application: **01.01.2025**
(21) Application number: 24184198.0
(22) Date of filing: 25.06.2024
(51) Int. Cl.: G06Q 30/0201, G06Q 30/0203, G06Q 30/02, G06Q 30/0282, G06Q 30/0601

(54) **REVIEW PRESENTATION DEVICE AND REVIEW PRESENTATION METHOD**

(30) Priority: 27.06.2023 JP 2023105072
(71) Applicant: ASICS Corporation, Kobe-shi, Hyogo 650-8555 (JP)
(72) Inventor: ABE, Satoru, Kobe-shi, Hyogo, 650-8555 (JP); TAKASHIMA, Shingo, Kobe-shi, Hyogo, 650-8555 (JP); KOZUKA, Yuya, Kobe-shi, Hyogo, 650-8555 (JP)
(74) Representative: Stolmár & Partner Patentanwälte PartG mbB

(57) **Abstract**

A review presentation system (100) that receives a selection of a service or a product that a user has not previously purchased or used, receives user information and user perception, generates, based on the user information and the user perception, a provisional review sentence for the selected service or product using a prediction model to simulate the provisional review sentence as if written by the user, and presents, to the user, the generated provisional review sentence and the selected service or product. The user information includes the user's attributes and the user's preferences. The user perception includes results from a comprehensive survey previously given to the user.

## Description

### BACKGROUND

### 1. Technical Field

The present disclosure relates to a review presentation device and a review presentation method.

### 2. Background Information

Many people refer to review sentences written by others when purchasing products or reserving services online. There is a technology known for predicting evaluations regarding items and automatically generating reviews (see, for example, JP 7133689 B2 and Akihiro Kokubo, Kazunari Sugiyama, "Description Sentences Generation Model Using Characteristics of Review Sentences and PPLM in Recommendation System", The 14th Forum on Data Engineering and Information Management (DEIM 2022), March 2022, pages C24-6:1-C24-6:8) .

However, in JP 7133689 B2 and Akihiro Kokubo, Kazunari Sugiyama, "Description Sentences Generation Model Using Characteristics of Review Sentences and PPLM in Recommendation System", The 14th Forum on Data Engineering and Information Management (DEIM 2022), March 2022, pages C24-6:1-C24-6:8, it is essential to have learning data based on a deep learning model that has learned from the reviews and evaluations for items the user has previously written. Therefore, it is not possible to automatically generate a review for a user who has not reviewed or evaluated other items in the past.

### SUMMARY

The present disclosure has been made in view of such a situation, and an object of the present disclosure is to provide a technology that presents a user with a provisional review sentence as if written by the user regarding an unexperienced item.

In order to solve the above problem, a review presentation device according to an aspect of the present disclosure includes: a processor; and a storage configured to store a program that, when executed by the processor, causes the processor to: receive a selection of a service or a product that a user has not previously purchased or used, receive user information and user perception, generate, based on the user information and the user perception, a provisional review sentence for the selected service or product using a prediction model to simulate the provisional review sentence as if written by the user, and present, to the user, the generated provisional review sentence and the selected service or product. The user information includes the user's attributes and the user's preferences, and the user perception includes results from a comprehensive survey previously given to the user.

Another aspect of the present disclosure is a review presentation method. This method includes: receiving a selection of a service or a product that a user has not previously purchased or used, receiving user information and user perception, generating, based on the user information and the user perception, a provisional review sentence for the selected service or product using a prediction model to simulate the provisional review sentence as if written by the user, and presenting, to the user, the generated provisional review sentence and the selected service or product. The user information includes the user's attributes and the user's preferences, and the user perception includes results from a comprehensive survey previously given to the user.

### BRIEF DESCRIPTION OF THE DRAWINGS

Fig. 1 is a diagram illustrating a basic configuration of a review presentation system;
Fig. 2 is a functional block diagram illustrating each configuration of the review presentation system;
Fig. 3 is a diagram illustrating a basic process of generating a provisional review sentence;
Fig. 4 is a diagram illustrating an example of a simple test screen for presenting a question in a case where the appearance is used as an evaluation axis;
Fig. 5 is a diagram illustrating an example of a simple test screen for presenting a question in a case where a function is used as an evaluation axis;
Fig. 6 is a diagram illustrating an example of a simple test screen for presenting a question for identifying the tendency of expression by a user;
Fig. 7 is a diagram illustrating an example of a screen for presenting a review target candidate, a provisional review sentence, and a predicted evaluation value;
Fig. 8 is a diagram illustrating a basic process of generating a provisional review sentence according to a second embodiment;
Fig. 9 is a diagram illustrating a basic process of generating a provisional review sentence according to a third embodiment; and
Fig. 10 is a diagram illustrating a basic process of generating a provisional review sentence according to a fourth embodiment.

### DETAILED DESCRIPTION

Hereinafter, a description will be given with reference to the drawings based on embodiments. In the embodiments and modifications, the same or equivalent constituent elements are denoted by the same reference numerals, and redundant description will be omitted as appropriate.

### First Embodiment

When purchasing a product or reserving a service online, people refer to reviews written by others who have already purchased or used the product or service. However, if there are too many reviews, it may be difficult to determine which ones of the reviews to refer to. In such cases, users often search for reviews from people in similar situations to their own, but it is not always possible to find such reviews.

Therefore, a provisional review sentence is generated and presented to the user based on the prior information regarding the user, and a predetermined prediction model and language model, from the perspective of what kind of review sentence the user would write if the user were to purchase or use the product or service. The user can see and refer to the provisional review before purchasing or using the product or service, that is, before making the actual purchase or reservation. The user can then determine whether to proceed with purchasing the product or service based on the provisional review sentence.

A product or service that is the subject of the provisional review sentence being generated will be referred to as a review target. The review target includes various products and services. For example, in addition to purchasing products such as shoes and apparel, the review targets also include applying for participation in marathon events, hotel reservations, restaurant reservations, and the like. Note that the service reservation includes purchasing tickets or seats for the service.

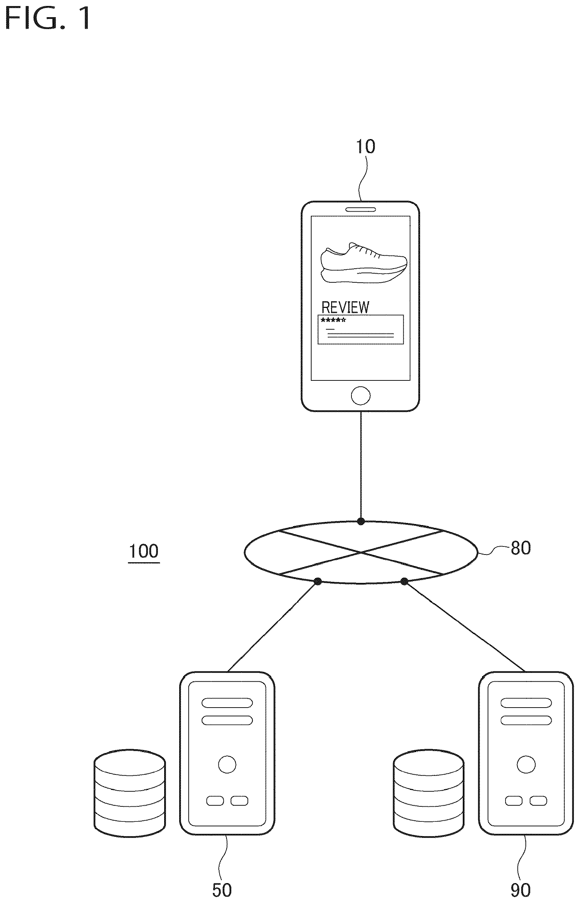

Fig. 1 illustrates a basic configuration of a review presentation system 100. The review presentation system 100 includes a user device 10 and a review presentation server 50. The review presentation system 100 may further include a language model server 90 that includes a language model for generating natural review sentences, or the language model may be built within the review presentation server 50. Alternatively, the review presentation system 100 may use a cloud-type large-scale language model server outside the review presentation system 100 as the language model server 90 via an application programming interface (API). Since creating a language model from scratch requires an enormous calculation cost, an external large-scale language model that is pre-trained in advance may be efficiently used or fine-tuned to create a unique language model. Furthermore, fine-tuning involves training the language model using a dataset of past review sentences accumulated by the entity providing the review presentation server 50, or using an enormous dataset of review sentences provided by a third party. As a result, the difference between the provisional review sentences to be generated and the existing review sentences can be reduced.

The review presentation server 50 is a server that generates a provisional review sentence of a review target based on the prediction model and the language model. The review presentation server 50 may function as an online shopping site that sells specific products, an online reservation site that accepts reservations for specific services, or the like. The review presentation server 50 is a server computer connected to a plurality of user devices 10 via a network 80 including the Internet, a local area network (LAN), and the like. The review presentation server 50 may be configured as a single server computer or as a combination of a plurality of server computers. The user device 10 is a device operated by the user, and may be an information terminal such as a smartphone, a tablet terminal, or a personal computer owned by the user.

The user can access the online shopping site or the online reservation site built on the review presentation server 50 using the user device 10 to browse the provisional review sentence displayed together with the information of the product or the service. Note that, in the claims, the "review presentation device" may refer to the entire review presentation system 100 or the review presentation server 50. In the present embodiment, since the review presentation server 50 performs many of the characteristic functions of the "review presentation device" in the claims, the review presentation server 50 substantially corresponds to the "review presentation device". However, the characteristic functions of the "review presentation device" may be distributed to the user device 10 and the review presentation server 50, or the user device 10 may implement many of the characteristic functions of the "review presentation device".

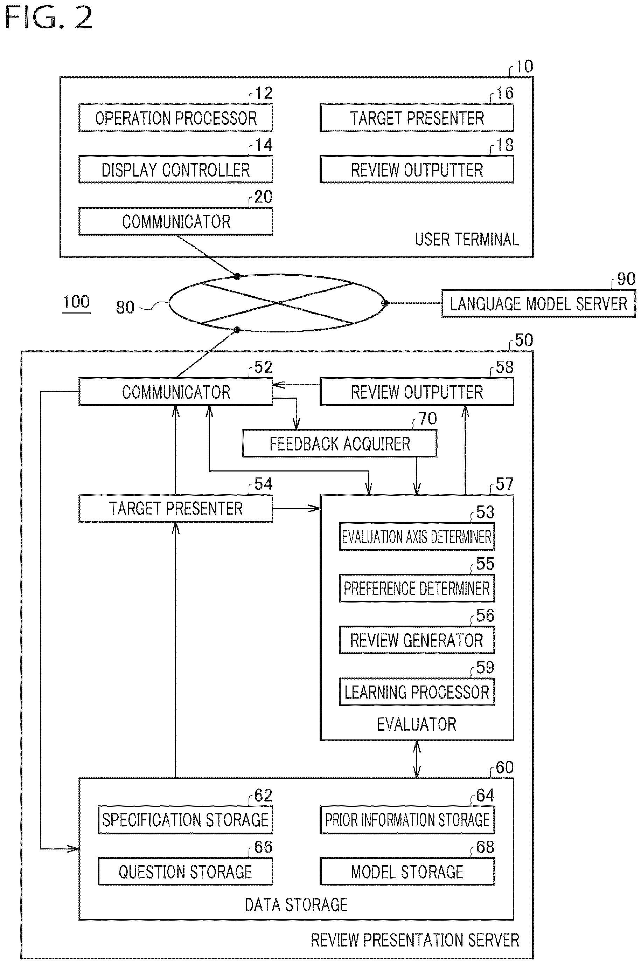

Fig. 2 is a functional block diagram illustrating each configuration of the review presentation system 100. In the present embodiment, the review presentation system 100 includes the user device 10 and the review presentation server 50. However, it is conceivable that the review presentation system 100 is realized by various hardware configurations and software configurations. For example, the review presentation system 100 may include only the review presentation server 50 or may include only the user device 10.

Fig. 2 illustrates functional blocks realized by cooperation of various hardware configurations and software configurations of the user device 10 and the review presentation server 50. Therefore, it is understood by those skilled in the art that these functional blocks can be implemented in various forms, such as by only hardware, only software, or a combination thereof. The user device 10 is configured by a combination of hardware such as a microprocessor, a touch panel, a memory, a communication module, and the like. The user device 10 includes an operation processor 12, a display controller 14, a target presenter 16, a review outputter 18, and a communicator 20. The functions of the operation processor 12, the display controller 14, the target presenter 16, the review outputter 18, and the communicator 20 are substantially exhibited by cooperation of software and hardware by installing a program for realizing the functions in the user device 10, or accessing a web site provided by the review presentation server 50 via a web browser.

The operation processor 12 accepts a user's input via an operation input means such as a touch panel, for example, a selection of a product or a service for which a provisional review sentence is generated as a review target. The display controller 14 displays information received from the review presentation server 50 on a screen such as a touch panel. The target presenter 16 receives information about the selected review target from the review presentation server 50 and presents the information of the selected review target to the user through a screen display using the display controller 14. The review outputter 18 outputs the provisional review sentence generated by the review presentation server 50 to the screen display using the display controller 14. The target presenter 16 and the review outputter 18 may have functions equivalent to those of a target presenter 54 and a review outputter 58 in the review presentation server 50 described later. Furthermore, at least one of the functions of the "target presenter" and the "review outputter" may be realized only on the user device 10 or only on the review presentation server 50, or may be realized by cooperation between the user device 10 and the review presentation server 50.

The review presentation server 50 includes, for example, a combination of hardware such as a microprocessor, a memory, a display, a communication module, and the like. The review presentation server 50 may be a server computer built and managed by a shoe manufacturer. The review presentation server 50 includes a communicator 52, the target presenter 54, an evaluator 57, the review outputter 58, a data storage 60, and a feedback acquirer 70. A program for realizing the functions of the communicator 52, the target presenter 54, the evaluator 57, the review outputter 58, the data storage 60, and the feedback acquirer 70 is executed in the review presentation server 50. The communicator 20 of the user device 10 and the communicator 52 of the review presentation server 50 are connected via the network 80. The data storage 60 includes a specification storage 62, a prior information storage 64, a question storage 66, and a model storage 68. The evaluator 57 includes an evaluation axis determiner 53, a preference determiner 55, a review generator 56, and a learning processor 59.

The specification storage 62 stores various types of review target candidates and their respective specification information. The review target candidates include products or services that are candidates for the user to consider purchasing or using. For example, the review target candidates may be products such as shoes or clothes, events such as marathon events or concerts, or services such as accommodation facilities or restaurants. The specification storage 62 classifies and stores the review target candidates by category. The specification information includes attributes or specifications such as quality, price, type, application, category, and customer segment of the products or services corresponding to the review target candidates. In a case where the review presentation server 50 also serves as an online shopping site that sells sports shoes, the specification information specifies the purpose of using the sports shoes and the type of the sports shoes such that the specification information may include product specifications such as the price, use, application, outer shape type, color type, sports category, and corresponding player level of the sports shoes.

The target presenter 54 transmits data of the online shopping site or the online reservation site to the user device 10 via the communicator 52. The target presenter 54 presents at least one of the plurality of review target candidates stored in the specification storage 62 to the user for considering the purchase of the product or service corresponding to the presented review target candidate. The one review target candidate presented to the user may include, for example, a product or service that the user has not yet purchased or used, or a product or service that the user has not yet reviewed regardless of whether the user has purchased or used the product or service. Whether the user has purchased or used the product or service may be estimated by referring to purchase or order history or by asking the user directly, and the product or service that the user has already purchased, used, or reviewed may be excluded from being presented to the user as the one review target candidate. In a case where the review target candidates are products, the target presenter 54 electronically exhibits products to be sold, such as shoes and clothes, as the review target candidates for the user to consider as potential items to purchase or use. When the user instructs detailed display of any one of the exhibited products, the product displayed in detail is selected as a review target.

Furthermore, in a case where the review target candidates are services, a plurality of types of services are electronically introduced on an online reservation site or an online ticket reservation site, thereby presenting a plurality of services as candidates for the user to consider purchasing or using. When the user instructs to display details of any one of the introduced services, the service displayed in detail is selected as a review target.

The prior information storage 64 stores prior information that has been acquired and accumulated in advance regarding the user. Here, the prior information includes two types of information: first information and second information. The first information includes information regarding the input by the user in the past or information regarding the past activity history of the user, which are general customer information that does not necessarily directly relate to or depend on the products or services selected as the review targets by the user. On the other hand, the second information includes information obtained based on the user's responses to questions in a simple test such as a comprehensive survey conducted in advance in relation to the products or services selected as the review targets by the user. The first information and the second information include information having the characteristics of the dataset to be used for machine learning. Hereinafter, the first information and the second information will be described.

The first information in the prior information includes user identification information, attribute information, preference information, product purchase history, service reservation history, product usage history and usage level, user inputs, and the like. The first information may include past review sentences created by the user for other products or services, or may reflect feedback information described later.

The identification information of the user is information necessary for login to the review presentation server 50, such as the user's account information and password, and is generated based on the user's input during an account registration procedure when the review presentation server 50 is used for the first time. In addition, another information including the attribute information of the user mainly includes information entered by the user as necessary information during the account registration procedure, and information entered in response to a survey for surveying the user's interest or concern regardless of whether the survey related to the product or service selected as a review target by the user. The more the user responds to the questions presented in surveys, particularly in areas of personal interest, the higher the quality and accuracy of the reviews generated will be. By linking the identification information of the user with personal information such as attribute information described below, a user flow from selecting a review target to presenting a provisional review sentence of the selected review target can be simplified.

The attribute information of the user includes, for example, attributes such as the user's age, gender, height, weight, place of residence, and language used by the user, and may include information related to specific product or service, such as intended use, purpose, customer segment, and price segment. For example, in a case where the product is sports shoes, information such as foot shape data, player level, and exercise purpose may be included. In a case where the product is an apparel, information such as body shape data and a category of clothes may be included.

The preference information includes information such as a preference for the product and service for each user, a use purpose of the product for each user, a use purpose of the service for each user, and the like. The product purchase history and the service reservation history include a product purchase history and a service reservation history for each user provided through the review presentation server 50.

The second information in the prior information includes information regarding the user's responses to a simple test such as a comprehensive survey on the product or service to be reviewed as a review target. The question storage 66 stores question information that is a simple question such as a comprehensive survey regarding each of a plurality of review target candidates. The target presenter 54 presents the question information to the user considering purchasing or using a review target, and acquires a response of the user to the question information as prior information regarding the user.

The question information includes questions for determining an evaluation axis among a plurality of evaluation axes is most consistent with or closest to the user's preferences for generating the provisional review sentence. The evaluation axes include, for example, criteria such as appearance, functionality, perception, number of purchases, service, reactions from a third party, and price, with at least one of these criteria being set as the evaluation axis. The question information corresponding to each evaluation axis is stored in the question storage 66 and presented to the user. The question information may include a question that presents a plurality of images and asks the user to select one of the images that matches the user's preference. Other question information may include a question that presents a plurality of topics and asks the user to select the importance of each topic. Other question information may include a question that presents a plurality of review sentence examples with different writing styles or tones and asks the user to select the one review sentence example that is closest to the user's writing style, tone, language, or sentence length of reviews. The evaluation axis determiner 53 determines the evaluation axis of the provisional review sentence based on the response of the user to the question information. The evaluation axis determiner 53 may determine that the evaluation axis corresponding to the areas or items of the user's interest with a higher number of responses received from the user among a large number of topics presented to the user as the question information is relatively important. The evaluation axis determiner 53 may determine that the evaluation axis is relatively important as the user's response time to one question is shorter, the user's preference toward the evaluation axis becomes clearer. The review generator 56 generates a provisional review sentence along the determined evaluation axis.

The model storage 68 stores in advance a prediction model that predicts evaluation (hereinafter, referred to as a "predicted evaluation value") for a product or service based on the specification information of the product or service and the prior information for each user. This prediction model is a pre-trained model for predicting an evaluation value from specification information of a product or a service and prior information for each user. The preference determiner 55 generates the predicted evaluation value using the prediction model based on the specification information of the product or service and the prior information for each user. The predicted evaluation value may include parameters of a plurality of evaluation axes to be described later, and a weight according to preferences for each user may be assigned to the plurality of evaluation axes. The preference determiner 55 may determine the preference of the user as information to be input to the prediction model based on the prior information of the user. The preference determiner 55 may determine the preference of the user based on response results of the user on a plurality of evaluation axes in questions in a simple test such as a comprehensive survey. The preference determiner 55 may determine that, as the user gives more responses to the fields or topics the user is particularly interested in among a large number of topics presented as the question information, the degree of preference to that field or topic increases. The preference determiner 55 may determine that the degree of preference for the field or topic increases as the response time to one question becomes shorter as the user's preference toward the evaluation axis is clear.

The model storage 68 further stores a language model for generating a provisional review sentence based on the specification information of the product or service, the prior information of the user, and the predicted evaluation value. This language model may be a model obtained by using the learning processor 59 to fine-tune a large-scale language model of the language model server 90 connected via the network 80. The learning processor 59 may execute fine-tuning on the language model using a dataset of the prior information for each user. The learning processor 59 may execute fine-tuning on the language model using feedback information to be described later. The learning processor 59 may re-train the prediction model using the feedback information to be described later.

Note that, in the present embodiment, an example has been described in which the preference determiner 55 generates the predicted evaluation value using the prediction model and then generates the provisional review sentence using the predicted evaluation value and the language model. In the modification, the prediction model may include the language model, and the prediction model may be pre-trained so that the prediction model directly generates the predicted evaluation value and the provisional review sentence based on the specification information of the product or service and the prior information of the user. For example, in a case where the prior information includes a large dataset of a plurality of past review sentences, the prediction model for generating a provisional review sentence from the specification information and the prior information may be built in advance by fine-tuning the language model using such an enormous number of review sentences.

The information input to the prediction model or the language model includes not only the specification information of a product or the like, the attribute information or the preference information of the user, and a past review sentence, but also the response information of a simple test such as a comprehensive survey given to the user when generating the provisional review sentence. The simple test such as the comprehensive survey provides important information for exploring the user's preferences. The simple test such as comprehensive survey is configured to easily identify information indicating which of a plurality of evaluation axes the user particularly values. That is, in the simple test such as the comprehensive survey, a plurality of simple questions is categorized into a plurality of evaluation axes to understand the characteristic of the user's preference from a state in which there is little information regarding the user's preference. For example, a question that presents a plurality of images having greatly different color tones and asks the user to select the user's preferred color tone is a question corresponding to an appearance evaluation axis. For example, in a case where the user selects an image with a blue base color, the preference determiner 55 determines that the user's preferred color is blue. For example, for a user who provides more responses to questions regarding color tones, it is determined that the appearance evaluation axis is relatively important to the user. That is, the question information included in the comprehensive survey is structured to correspond to a plurality of evaluation axes, and the user's response information to the questions includes information indicating the preference of the user for each evaluation axis and the information indicating the type of evaluation axis that the user particularly values. For example, the evaluation axis determiner 53 may estimate which evaluation axis is particularly valued by the user based on a topic arbitrarily responded by the user or a topic intensively responded by the user among a plurality of questions corresponding to a plurality of evaluation axes. Alternatively, the evaluation axis determiner 53 may estimate which evaluation axis is valued by the user depending on how short the time spent by the user to respond was or how quickly the user responded. Conversely, the evaluation axis determiner 53 estimates which evaluation axis the user does not value based on a topic having a low response rate from the user or a topic that the user did not respond to at all among the plurality of questions corresponding to the plurality of evaluation axes.

The user's response history to the questions is stored in the prior information storage 64. The preference determiner 55 and the evaluation axis determiner 53 may reuse the user's response content included in the past response history stored in the prior information storage 64 to determine the user's preference and the evaluation axis, or may add information of the past question and response to the user's response to new question information to determine the user's preference and the evaluation axis.

The review outputter 58 transmits the provisional review sentence generated by the review generator 56 to the user device 10 and presents the provisional review sentence to the user. The review outputter 58 may present the predicted evaluation value generated by the review generator 56 to the user together with the provisional review sentence in the form of the number of stars, a radar chart, or the like.

The feedback acquirer 70 acquires feedback information input by the user after the provisional review sentence of a product or service is presented to the user and the product or service is purchased or used by the user. For example, the feedback information may be a numerical value indicating how closely the provisional review sentence presented to the user matches the impression of the user who has actually purchased or used the product or service, or may be a review sentence actually written by the user based on the user's actual impression. In a case where the feedback information is the review sentence actually written by the user, the review sentence that was actually written by the user may be stored in the prior information storage 64 as a new dataset to be used for new training of the prediction model or the language model. The review generator 56 may regenerate the provisional review sentence based on the feedback information. Furthermore, the feedback information may be used as a dataset for re-training the prediction model or the language model. By using the feedback information for re-training, at the time of generating the next review, the accuracy of the evaluation axis to be emphasized improves, and feature amounts such as wording and length obtained from the analysis of the quality of the review are collected, and the provisional review can be generated reflecting personal characteristics. The review outputter 58 may transmit the regenerated provisional review sentence to the user device 10 to represent the provisional review sentence to the user.

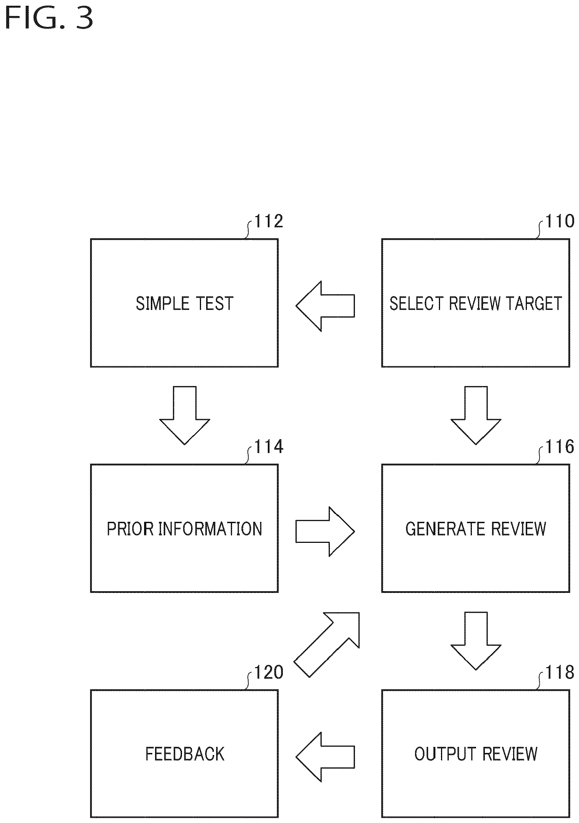

Fig. 3 illustrates a basic process of generating a provisional review sentence. First, when a product or service that has not yet been purchased or used by the user is selected as a review target (reference numeral 110), a question corresponding to the selected product or service is presented to the user in the form of a simple test such as a comprehensive survey (reference numeral 112). When the user responds to the question, information of the response is included in the prior information (reference numeral 114). The prior information regarding the user is sent to the evaluator 57, and a provisional review sentence is generated using a predetermined prediction model and language model based on the prior information (reference numeral 116). The generated provisional review sentence is output to the user device 10 by the review outputter 58 (reference numeral 118).

After purchasing or using the product or service, the user transmits feedback information based on the impression of the actual purchase or use of the product or service (reference numeral 120). The learning processor 59 re-trains the prediction model or the language model based on the feedback information. The provisional review sentence is regenerated (reference numeral 116) using the re-trained prediction model or language model, and the review outputter 58 may re-output the regenerated provisional review sentence to the user device 10 (reference numeral 118).

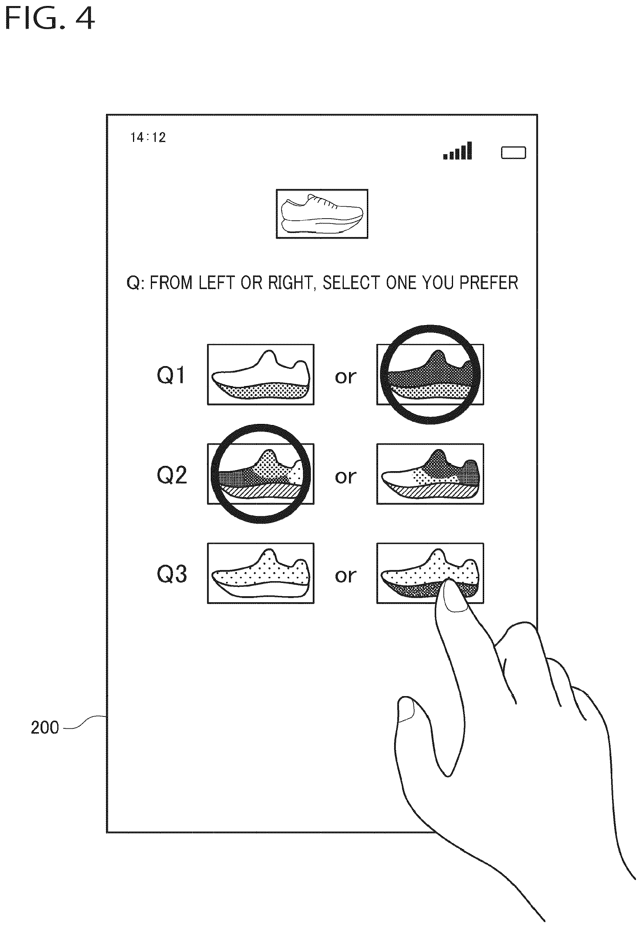

Fig. 4 illustrates an example of a simple test screen for presenting a question in a case where the appearance is used as an evaluation axis. On a simple test screen 200 of the user device 10, a pair of product images having contrasting color tones and outer shapes are presented, and a question asking which appearance is closest to the user's preference is presented. In the present embodiment, a pair of shoe images having contrasting color tones and outer shapes is presented as a question in a case where sports shoes are selected as a review target. A plurality of such pairs of product images are presented, and the tendency of the appearance of shoes preferred by the user is identified as the user provides more responses. Such response information is stored in the prior information storage 64 as the prior information.

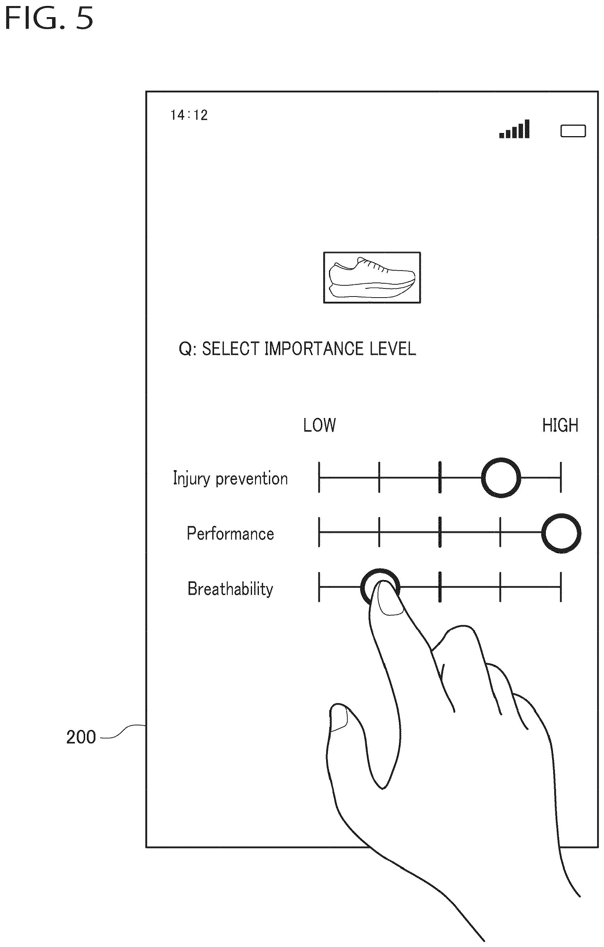

Fig. 5 illustrates an example of a simple test screen for presenting a question in a case where a function is used as an evaluation axis. On the simple test screen 200 of the user device 10, topics related to functions of shoes such as "injury prevention", "performance", and "breathability" are presented, and a question asking the level of importance for the user is presented for each topic. The more the user responds to the importance the user feels for each topic, the better the tendency of which features the user values can be understood. Such response information is stored in the prior information storage 64 as the prior information.

In addition, the target presenter 54 may present the user with a question related to an evaluation axis such as the user's perception, the degree of expectation, reaction from a third party, and price. The question related to the user's perception may be, for example, a question that presents a plurality of types of images and asks the user to evaluate a degree to which the user feels subjective such as a sense of security or pleasure. The question regarding the degree of expectation of the user may be, for example, a question that presents a plurality of types of images and asks the user for a numerically provide the degree of expectation of the user for the images. The reaction from a third party refers to an objective evaluation from others. For example, as a method of reflecting opinions of influencers the user likes or the contents of reviews with many endorsement, a question that represents various types of review sentence examples and asks the user to select a review sentence example closest to the user's own review may be used. The question about the price may be a question that presents, for example, a plurality of types of images, and asks the user to select an assumed price for the image or asks the user to select a price closest to the user's own monetary values.

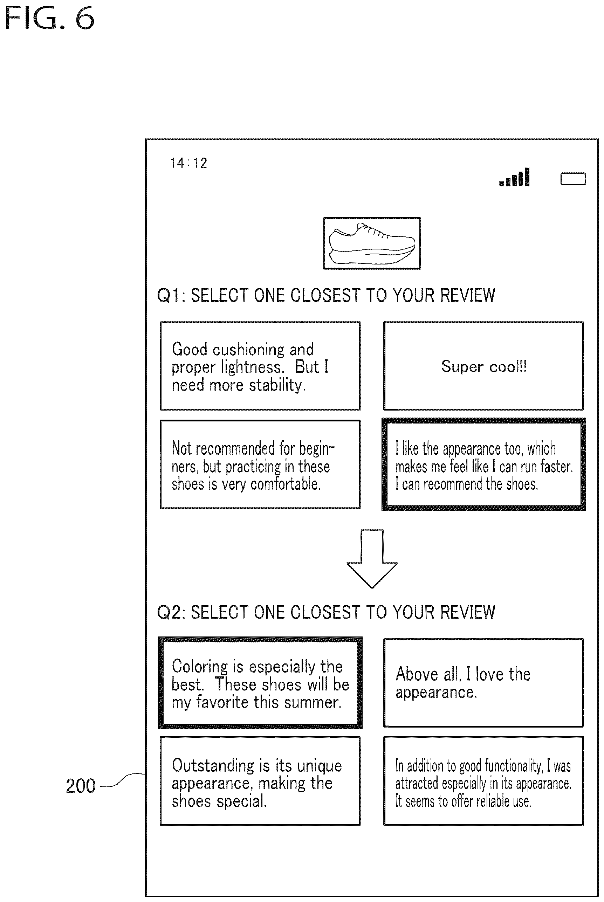

Fig. 6 illustrates an example of a simple test screen for presenting a question for identifying the tendency of expression by a user. On the simple test screen 200 of the user device 10, a plurality of review sentence examples of different sentence styles or tones are presented, and a question that asks the user to select a review sentence example that is closest to the user's preferred sentence style or tone is presented. The user's sentence style or tone can be estimated according to the user's selection. Such response information is stored in the prior information storage 64 as the prior information.

In addition, after the user responds to the selection of the review sentence example to the first question, the target presenter 54 may estimate the preference of the user and the evaluation axis to be emphasized according to the response content, and determine what options should be presented to the user as the subsequent review sentence examples according to the estimation result.

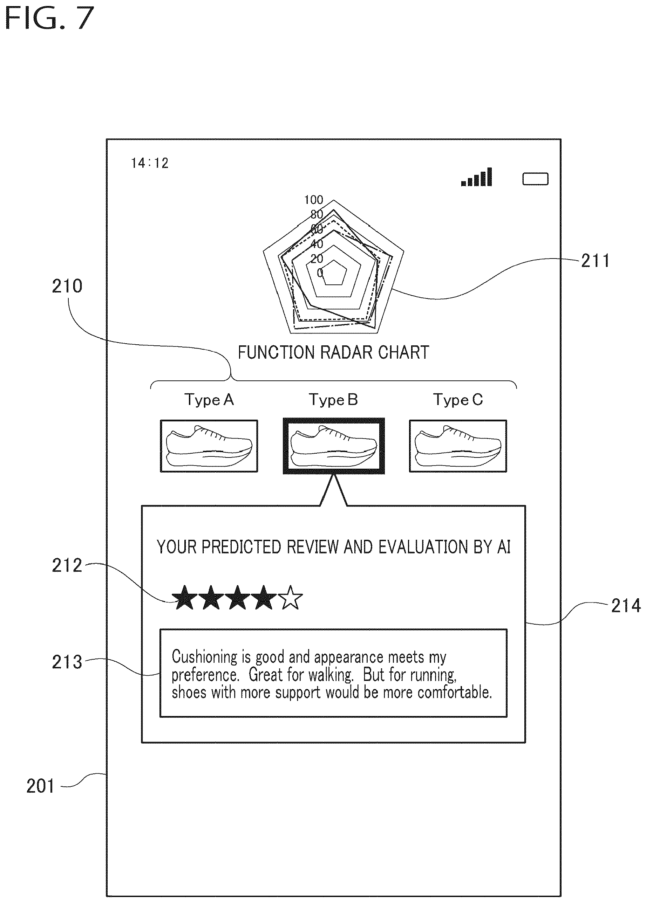

Fig. 7 illustrates an example of a screen for presenting review target candidates, provisional review sentences, and predicted evaluation values. On a screen 201, three products are presented to the user as selection candidates 210. In the example of Fig. 7, three types of shoes of "Type A", "Type B", and "Type C" are presented. In order to show the difference in function among these three types of shoes, the specification of each product stored in advance in the specification storage 62 is presented in the form of a radar chart 211. For example, one of the products (e.g., Type B) is initially in a selected state, and a provisional review sentence 213 and a predicted evaluation value 212 generated by the review generator 56 corresponding to the product (e.g., Type B) in the selected state are displayed in a review field 214. When the user selects another product (e.g., Type A or Type C), the provisional review sentence 213 and the predicted evaluation value 212 corresponding to the product in the selected state are displayed in the review field 214.

### Second Embodiment

The review presentation system 100 according to the second embodiment is different from the review presentation system 100 in the first embodiment in that a function of acquiring feedback information for the generated provisional review sentence and regenerating the provisional review sentence based on the feedback information is excluded. Hereinafter, differences from the first embodiment will be mainly described, and description of common points will be omitted.

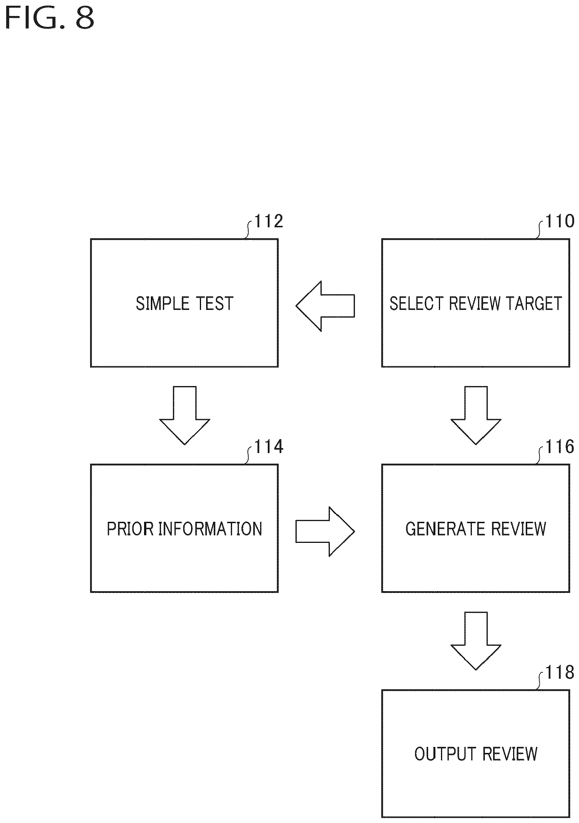

Fig. 8 illustrates a basic process of generating a provisional review sentence according to the second embodiment. First, when the user selects a product or service as a review target (reference numeral 110), questions corresponding to the selected product or service is presented to the user in the form of a simple test (reference numeral 112). When the user responds the questions, information of the response is included in the prior information (reference numeral 114). The prior information to be stored regarding the user is sent to the review generator 56, and a provisional review sentence is generated using a predetermined prediction model and language model based on the prior information (reference numeral 116). The generated provisional review sentence is output to the user device 10 by the review outputter 58 (reference numeral 118).

In the second embodiment, the user does not perform feedback of evaluating the provisional review sentence based on the impression after purchasing or using the product or service. However, even in this case, it is possible to generate a provisional review sentence as if created by the user with high accuracy using the prior information obtained from the simple test and to present the generated provisional review sentence to the user before the user purchases or uses the product or service.

### Third Embodiment

The review presentation system 100 according to the third embodiment is different from the review presentation system 100 according to the first and second embodiments in that the comprehensive survey for presenting questions to the user and obtaining responses to the questions is excluded. Hereinafter, differences from the first and second embodiments will be mainly described, and description of common points will be omitted.

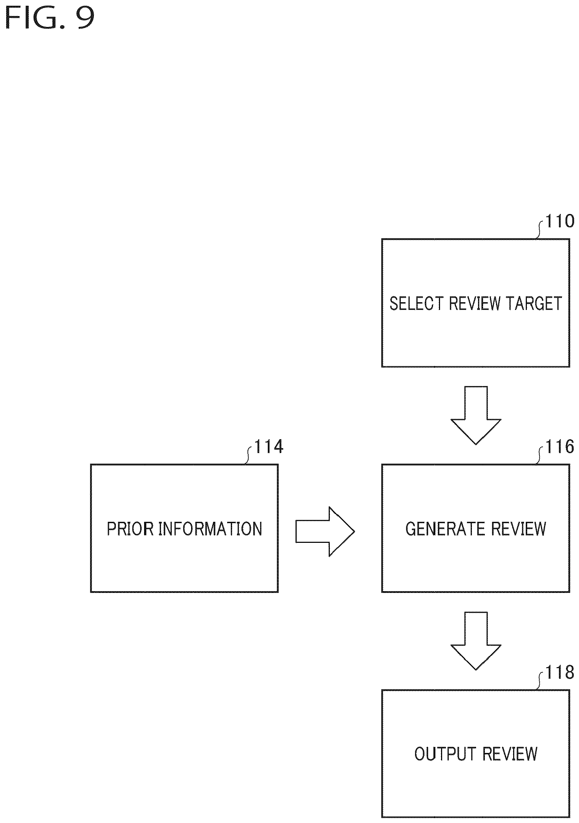

Fig. 9 illustrates a basic process of generating a provisional review sentence according to the third embodiment. First, when the user selects a product or service as a review target (reference numeral 110), information regarding the user is sent to the review generator 56 for storage, and a provisional review sentence is generated based on the user information using a predetermined prediction model and language model (reference numeral 116). The generated provisional review sentence is output to the user device 10 by the review outputter 58 (reference numeral 118).

Also in the third embodiment, the user does not perform feedback to evaluate the provisional review sentence based on the impressions after purchasing or using the product or the service. In addition, a simple test is not performed prior to generation of the provisional review sentence. However, even in this case, a provisional review sentence that appears as if written by the user can be generated with high accuracy based on the prior information stored in advance and presented to the user before the user purchases or uses the product or service.

### Fourth Embodiment

The review presentation system 100 according to the fourth embodiment is different from the review presentation system 100 according to the first to third embodiments in that only a result of a simple test such as a comprehensive survey for a review target is used as prior information and a review is generated without using prior information other than the result of the simple test. That is, the review presentation system 100 according to the fourth embodiment is different from the review presentation system 100 in the first to third embodiments in that the first information in the prior information is not used. Hereinafter, differences from the first to third embodiments will be mainly described, and description of common points will be omitted.

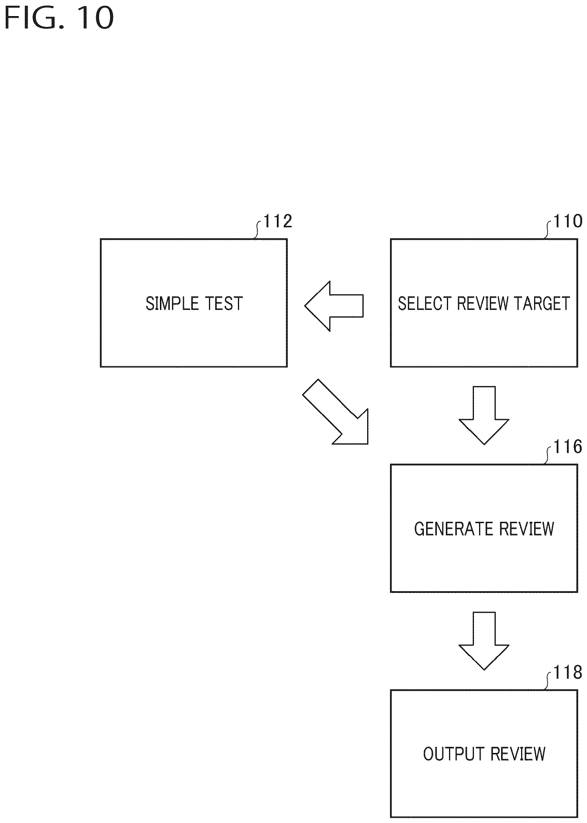

Fig. 10 illustrates a basic process of generating a provisional review sentence according to the fourth embodiment. First, when the user selects a product or service as a review target (reference numeral 110), a question corresponding to the selected product or service is presented to the user in the form of a simple test (reference numeral 112). When the user responds to the question, information of the response is sent to the review generator 56, and a provisional review sentence is generated using a predetermined prediction model and language model based on the response information (reference numeral 116). The generated provisional review sentence is output to the user device 10 by the review outputter 58 (reference numeral 118). In the present embodiment, evaluation axes (e.g., evaluation criteria) are determined based on the results of a simple test such as a comprehensive survey without being affected by the user's basic information, and a provisional review sentence is generated. As a result, the preferences and the state of the user at the time the user wants to refer to the review are strongly reflected in the provisional review sentence.

### Fifth Embodiment

The review presentation system 100 according to the fifth embodiment is different from the review presentation system 100 according to the first to fourth embodiments in selecting a plurality of review targets and generating provisional review sentences for respective selected review targets. Hereinafter, differences from the first to fourth embodiments will be mainly described, and description of common points will be omitted.

In the fifth embodiment, the user selects a plurality of review targets. In this case, a plurality of aspects is reflected in generating the provisional review sentences. As an example, it is considered that a marathon event and a lodging facility are selected as review targets. In the comprehensive survey, questions are presented that ask about the expected evaluation criteria for the accommodation facility on the premise of participation in a marathon event. Based on the responses to the questions, a provisional review sentence is generated. In addition, a comprehensive survey may be individually conducted for each of the plurality of review targets. Based on the number of responses and the response trends, which review target has a greater cognitive weight is determined, and the weight may be reflected in generating the provisional review sentences.

The embodiments have been described above. The embodiments are intended to be illustrative only and it will be understood by those skilled in the art that various modifications to their constituting elements and processes can be made and that such modifications are also within the scope. In addition, the following aspects can be obtained by generalizing the above-described embodiments.
(1) A review presentation device according to one aspect of the present disclosure includes:
   a processor; and
   a storage configured to store a program that, when executed by the processor, causes the processor to:
      receive a selection of a service or a product that a user has not previously purchased or used;
      receive user information and user perception, wherein the user information includes the user's attributes and the user's preferences, and wherein the user perception includes results from a comprehensive survey previously given to the user; and
      generate, based on the user information and the user perception, a provisional review sentence for the selected service or product using a prediction model to simulate the provisional review sentence as if written by the user; and
      present, to the user, the generated provisional review sentence and the selected service or product.
(2) The review presentation device according to (1),
   wherein the service or product that the user has not previously purchased or used is selected from a list of products and services that the user has or has not previously purchased or used, and
   wherein the comprehensive survey given to the user is regarding the selected service or product.
(3) In the review presentation device according to (1) or (2),
   wherein the processor determines the user's interests based on the results of the comprehensive survey .
(4) In the review presentation device according to any one of (1) to (3),
   wherein the comprehensive survey includes questions related to the user's interests,
   wherein an accuracy of identifying the user's interests increases as a number of the questions the user responses increases,
   wherein, in generating the provisional review sentence using the prediction model, the processor evaluates the results from the comprehensive survey to assign an importance value to a result of each of the questions in the comprehensive survey, and
   wherein, in the prediction model, an importance value assigned to a result of a specific question of the questions increases as an amount of time the user spends in responding the specific question decreases.
(5) In the review presentation device according to any one of (1) to (4),
   wherein the processor trains the prediction model using the user information and the user perception prior to generating the provisional review sentence,
   wherein the processor is configured to acquire, from the user, a feedback input on the presented provisional review sentence, and
   wherein the processor re-trains the prediction model using the feedback input.
(6) A review presentation method according to one aspect of the present disclosure includes:
   receiving a selection of a service or a product that a user has not previously purchased or used;
   receiving user information and user perception, wherein the user information includes the user's attributes and the user's preferences, and wherein the user perception includes results from a comprehensive survey previously given to the user; and
   generating, based on the user information and the user perception, a provisional review sentence for the selected service or product using a prediction model to simulate the provisional review sentence as if written by the user; and
   presenting, to the user, the generated provisional review sentence and the selected service or product.
(7) The review presentation method according to (6) wherein the service or product that the user has not previously purchased or used is selected from a list of products and services that the user has or has not previously purchased or used, and
   wherein the comprehensive survey given to the user is regarding the selected service or product.
(8) In the review presentation method according to (6) or (7), further includes
   determining the user's interests based on the results of the comprehensive survey.
(9) In the review presentation method according to any one of (6) to (8),
   wherein the comprehensive survey includes questions related to the user's interests,
   wherein an accuracy of identifying the user's interests increases as a number of the questions the user responses increases,
   wherein, in generating the provisional review sentence using the prediction model, the results from the comprehensive survey are evaluated to assign an importance value to a result of each of the questions in the comprehensive survey, and
   wherein, in the prediction model, an importance value assigned to a result of a specific question of the questions increases as an amount of time the user spends in responding the specific question decreases.
(10) In the review presentation method according to any one of (6) to (9), further includes:
   training the prediction model using the user information and the user perception prior to generating the provisional review sentence;
   acquiring, from the user, a feedback input on the presented provisional review sentence; and
   re-training the prediction model using the feedback input.
(11) The review presentation method according to any one of (6) to (10),
   wherein the processor trains the prediction model using the user information and the user perception prior to generating the provisional review sentence,
   wherein the processor is configured to acquire, from the user, a feedback input on the presented provisional review sentence, and
   wherein the processor re-trains the prediction model using the feedback input.
(12) A review presentation method according to one aspect of the present disclosure includes:
   receiving a selection of a service or a product that a user has not previously purchased or used;
   receiving, from a user, user information including the user's attributes and the user's preferences;
   receiving, from the user, results of a comprehensive survey;
   training a prediction model using the received user information and the received results of the comprehensive survey;
   generating, based on the received user information and the received results of the comprehensive survey, a provisional review sentence for the selected service or product using the prediction model to simulate the provisional review sentence as if written by the user;
   presenting, to the user, the generated provisional review sentence and the selected service or product; receiving, from the user, a feedback input on the presented provisional review sentence; and
   training the prediction model using the feedback input.
(13) The review presentation method according to (12),
   wherein the service or product that the user has not previously purchased or used is selected from a list of products and services that the user has or has not previously purchased or used, and
   wherein the comprehensive survey given to the user is regarding the selected service or product.
(14) The review presentation method according to (12) or (13), further includes
   determining the user's interests based on the results of the comprehensive survey.
(15) The review presentation method according to any one of (12) to (14),
   wherein the comprehensive survey includes questions related to the user's interests,
   wherein an accuracy of identifying the user's interests increases as a number of the questions the user responses increases,
   wherein, in generating the provisional review sentence using the prediction model, the results from the comprehensive survey are evaluated to assign an importance value to a result of each of the questions in the comprehensive survey, and
   wherein, in the prediction model, an importance value assigned to a result of a specific question of the questions increases as an amount of time the user spends in responding the specific question decreases.

## Claims

1. A review presentation device (100) comprising:
a processor; and
a storage configured to store a program that, when executed by the processor, causes the processor to:
receive a selection of a service or a product that a user has not previously purchased or used;
receive user information and user perception, wherein the user information includes the user's attributes and the user's preferences, and wherein the user perception includes results from a comprehensive survey previously given to the user;
generate, based on the user information and the user perception, a provisional review sentence for the selected service or product using a prediction model to simulate the provisional review sentence as if written by the user; and
present, to the user, the generated provisional review sentence and the selected service or product.

2. The review presentation device (100) according to claim 1,
wherein the service or product that the user has not previously purchased or used is selected from a list of products and services that the user has or has not previously purchased or used, and
wherein the comprehensive survey given to the user is regarding the selected service or product.

3. The review presentation device (100) according to claim 1 or 2, wherein the processor determines the user's interests based on the results of the comprehensive survey.

4. The review presentation device according to claim 1 to 3,
wherein the comprehensive survey includes questions related to the user's interests,
wherein an accuracy of identifying the user's interests increases as a number of the questions the user responses increases.

5. The review presentation device (100) according to claim 1,
wherein, in generating the review sentence using the prediction model, the processor evaluates the results from the comprehensive survey to assign an importance value to a result of each of the questions in the comprehensive survey, and
wherein, in the prediction model, an importance value assigned to a result of a specific question of the questions increases as an amount of time the user spends in responding the specific question decreases.

6. The review presentation device (100) according to any one of claims 1 to 5,
wherein the processor trains the prediction model using the user information and the user perception prior to generating the review sentence,
wherein the processor is configured to acquire, from the user, a feedback input on the presented review sentence, and
wherein the processor re-trains the prediction model using the feedback input.

7. A review presentation method comprising:
receiving a selection of a service or a product that a user has not previously purchased or used;
receiving user information and user perception, wherein the user information includes the user's attributes and the user's preferences, and wherein the user perception includes results from a comprehensive survey previously given to the user; and
generating, based on the user information and the user perception, a review sentence for the selected service or product using a prediction model to simulate the review sentence as if written by the user; and
presenting, to the user, the generated review sentence and the selected service or product.

8. The review presentation method according to claim 7, wherein the service or product that the user has not previously purchased or used is selected from a list of products and services that the user has or has not previously purchased or used, and
wherein the comprehensive survey given to the user is regarding the selected service or product.

9. The review presentation method according to claim 8, further comprising determining the user's interests based on the results of the comprehensive survey.

10. The review presentation method according to claim 9,
wherein the comprehensive survey includes questions related to the user's interests,
wherein an accuracy of identifying the user's interests increases as a number of the questions the user responses increases.

11. The review presentation method according to claim 7,
wherein, in generating the review sentence using the prediction model, the results from the comprehensive survey are evaluated to assign an importance value to a result of each of the questions in the comprehensive survey, and
wherein, in the prediction model, an importance value assigned to a result of a specific question of the questions increases as an amount of time the user spends in responding the specific question decreases.

12. The review presentation method according to any one of claims 7 to 11, further comprising:
training the prediction model using the user information and the user perception prior to generating the review sentence;
acquiring, from the user, a feedback input on the presented review sentence; and
re-training the prediction model using the feedback input.

13. A review presentation method comprising:
receiving a selection of a service or a product that a user has not previously purchased or used;
receiving, from a user, user information including the user's attributes and the user's preferences;
receiving, from the user, results of a comprehensive survey;
training a prediction model using the received user information and the received results of the comprehensive survey;
generating, based on the received user information and the received results of the comprehensive survey, a review sentence for the selected service or product using the prediction model to simulate the review sentence as if written by the user;
presenting, to the user, the generated review sentence and the selected service or product; receiving, from the user, a feedback input on the presented review sentence; and
training the prediction model using the feedback input.

14. The review presentation method according to claim 13,
wherein the service or product that the user has not previously purchased or used is selected from a list of products and services that the user has or has not previously purchased or used, and
wherein the comprehensive survey given to the user is regarding the selected service or product,
wherein the user's interests is determined based on the results of the comprehensive survey.

15. The review presentation method according to claim 13 or 14,
wherein the comprehensive survey includes questions related to the user's interests,
wherein an accuracy of identifying the user's interests increases as a number of the questions the user responses increases,
wherein, in generating the review sentence using the prediction model, the results from the comprehensive survey are evaluated to assign an importance value to a result of each of the questions in the comprehensive survey, and
wherein, in the prediction model, an importance value assigned to a result of a specific question of the questions increases as an amount of time the user spends in responding the specific question decreases.
